# FASCICULE DE BREVET EUROPEEN

(11) **EP 2 448 430 B1**
(45) Date de publication et mention de la délivrance du brevet: **04.03.2015**
(21) Numéro de dépôt: 10734822.9
(22) Date de dépôt: 25.06.2010
(51) Int. Cl.: A23L 1/221, A23L 1/222, A23L 1/235

(54) **PRODUCTION D'AROMES NATURELS DE TRUFFE A PARTIR DE MYCELIUM TRUFFIER**
HERSTELLUNG VON NATUERLICHEM TRUFFLESAROMA AB TRUFFLESMYCELIUM
PRODUCTION OF TRUFFLE NATURAL AROMA FROM TRUFFLE MYCELIUM

(30) Priorité: 03.07.2009 CH 10402009
(43) Date de publication de la demande: 09.05.2012
(73) Titulaire: Splivallo, Richard, 1009 Pully (CH); Maier, Christophe, 1218 Le Grand-Saconnex (CH)
(72) Inventeur: Splivallo, Richard, 1009 Pully (CH); Maier, Christophe, 1218 Le Grand-Saconnex (CH)
(74) Mandataire: KATZAROV S.A.
(86) Numéro de dépôt international: PCT/IB2010/052913
(87) Numéro de publication internationale: WO 2011/001349

(56) Documents cités:
- FR-A1- 2 517 180
- FR-A1- 2 601 857
- FR-A1- 2 637 779
- JP-A- 2005 295 858
- R.SPLIVALLO: "Discrimination of truffle fruiting body versus mycelial aromas by sti bar sorptive extraction" PHYTOCHEMISTRY 2007, XP002603707 Extrait de l'Internet: URL:http://www.sciencedirect.com/science?_ ob=MImg&_imagekey=B6TH7-4NYSHBS-1-7&_cdi=5 275&_user=987766&_pii=S0031942207002075&_o rigin=search&_coverDate=10%2F31%2F2007&_sk =999319979&view=c&wchp=dGLzVzz-zSkWA&md5=6 80647c26ece05c8d36d77fdd9975d0a&ie=/sdarti cle.pdf [extrait le 2010-10-05] cité dans la demande

## Description

### DOMAINE DE L'INVENTION.

La présente invention concerne un procédé de production d'arômes naturels de truffe (Tuber ssp.) à partir de mycélium truffier en culture, ainsi que l'utilisation d'au moins un précurseur d'arôme pour induire la production de composés volatils de l'arôme naturel des corps fructifères de truffes (Tuber ssp.) à partir de mycélium truffier en culture.

### DISCUSSION DE L'ART ANTERIEUR :

La truffe, (genre : Tuber, famille: Tubéracées, ordre Pezizales) est un champignon ascomycète formant des symbioses (ectomycorrhizes) avec des chênes, hêtres, noisetiers etc. Parmi les 60 espèces existantes, seulement quelques unes sont prisées pour leurs arômes et leurs goûts, parmi elles le *Tuber melanosporum* (truffe noire du Périgord), *Tuber magnatum* (truffe blanche du Piedmont), *Tuber aestivum* (truffe d'été), *Tuber brumale* (une truffe noire), *Tuber borchii* (ou truffette blanche italienne). La production mondiale ne cesse de baisser: environ 1000 tonnes par an au début du siècle mais uniquement 80 à 150 tonnes par an de nos jours.
Depuis plus de 50 ans, l'homme plante des arbres dont les racines sont infectées par la truffe. Moins de 5% des arbres produisent des truffes, et ceci généralement après 5-10 ans seulement, car on comprend encore très peu la biologie du champignon.

Le bouquet aromatique des truffes contient environ 50 molécules, généralement des hydrocarbures contenant des groupes alcool, cétones, aldéhydes, esters et des atomes de soufre. Différentes espèces de truffes ont une odeur différente car elles produisent certains composés volatils spécifiques à l'espèce. Toutefois certaines molécules sont communes à toutes les truffes mais sont produites par chaque espèce dans des proportions bien spécifiques. Considérées séparément, aucune de ces molécules ne sent la truffe mais une fois combinées dans les proportions exactes elles reproduisent l'arôme de truffe.

A ce jour l'arome de truffe est obtenu soit à partir de corps fructifères de truffes dont les molécules aromatiques sont emprisonnées dans un support solide (par exemple du riz, certains fromages ou du fois gras) ou liquide (huiles, crèmes) par extraction ou macération, soit à partir d'arôme synthétique de truffe essentiellement composé de diméthylsulfure et de 2-méthyle butanal selon la demande de brevet français FR 86 10871 A1 (Delmas, Institut National Polytechnique de Toulouse) ou le brevet italien IT 1215936B (SENTOSA S.A.S MILANO) décrivant l'utilisation des deux composés synthétiques diméthylsulfure et méthyléthylcétone (aussi appelé 2-butanone) pour reproduire l'arôme de truffe noire.

L'utilisation de composés chimiques dans des proportions bien précises que décrivent les brevets français et italien mentionnés ci-dessus ne permet pas selon la législation Européenne d'utiliser pour les produits ainsi obtenus l'appellation « arôme naturel de truffe ». Or l'invention décrite ci-dessous permet justement d'obtenir un « arôme naturel de truffe noire ou blanche », car les molécules aromatiques sont directement produites par le mycélium truffier.

Par ailleurs, depuis la découverte de l'arôme synthétique de la truffe, de nombreux experts internationaux s'accordent sur le fait que l'arôme synthétique est loin de présenter la complexité et les nuances de l'arôme naturel de la truffe, simplement par le fait que l'arôme synthétique ne contient que quelques molécules (2 à 5 au total) en comparaison à un arôme naturel de truffe qui contient bien plus de composés volatils (plus d'une vingtaine). D'autre part le coût de production de l'arôme naturel de la truffe est en augmentation constante dû à la baisse en production de corps fructifères au niveau mondial (Fauconnet and Delher 1998; Hall and Yun 2001).

D'autre part, les analyses d'arômes effectuées jusqu'à ce jour sur le mycélium de truffe (truffette blanche Italienne *Tuber borchii*) ont démontré que bien que de nombreuses molécules aromatiques soient produites de façon spontanée par le mycélium, celles-ci ne reproduisent ni la complexité aromatique ni le bouquet de truffes fraîches (Tirillini et al., 2000; Splivallo et al., 2007). De plus la compagnie américaine Truffes International qui cultive du mycélium de truffe noire en cultures hydroponiques reconnaît que le goût et l'arôme de leurs produits différent clairement de celui des corps fructifères de truffes, essentiellement dû à une très basse concentration en composés soufrés (Fields, 2007 ; et voir aussi le site web de la compagnie « Truffles International » http://www.trufflesinternational.com/truffle_science.html).

A ce sujet il faut souligner que les milieux de culture utilisés jusqu' à maintenant pour cultiver le mycélium de truffe contiennent de basses concentrations d'acides aminés (traces), car ces milieux de cultures sont eux-mêmes issus de matière végétale (par exemple l'extrait de pommes de terre « potato dextrose broth » utilisé par Splivallo et al., « Discrimination of truffle fruiting body versus mycelial aromas by stir bar sorptive extraction », Phytochemistry (Amsterdam) Oct 2007, Vol. 6668, No. 20, pp 2584-2598). Les acides aminés sont en effet souvent utilisés en microbiologie pour favoriser la croissance de microorganismes. Dans le cas de mycélium truffier, cette basse concentration d'acides aminés (traces) ne suffit pas pour induire la production de volatils clefs de l'arôme de truffe.

JP 2005295858 conseille également l'utilisation d'acides aminés afin de favoriser la nutrition azotée du mycélium de truffe noire et favoriser sa croissance. Toutefois les auteurs de ce document admettent que le mycélium ainsi obtenu ne reproduit en rien l'odeur de truffe, et recommandent même de sécher le mycélium ainsi obtenu afin de rendre le produit commercialisable (ce qui détruit à coup certain n'importe quelle molécule volatile).

En résumé, la présente invention permet d'induire la production des composés volatils (composés soufrés et autres composés clefs) de manière ciblée afin d'obtenir un bouquet aromatique caractéristique de l'arôme naturel des corps fructifères truffiers.

Il s'ensuit que la présente invention répond aussi à un besoin du marché vis a vis des consommateurs de produits truffés et aromatisés à la truffe non satisfaits des produits à base d'arômes synthétiques et désireux de ne pas dépenser une fortune pour acquérir des produits à base d'arômes naturels. Par ailleurs, la présente invention permet également d'écarter toutes les contraintes notamment écologiques liées à la surexploitation des corps fructifères dans la nature.

### BREVE DESCRIPTION DE L'INVENTION :

La présente invention concerne un procédé de production d'arômes naturels de truffe (Tuber ssp.) à partir de mycélium truffier en culture, comprenant au moins un précurseur d'arôme additionné au milieu de culture dudit mycélium truffier lui conférant ainsi les caractéristiques aromatiques des corps fructifères de truffes et où le dit précurseur d'arôme est sélectionné parmi les acides aminés naturels ou synthétiques de la L-méthionine, la leucine, l'isoleucine, la valine, la phénylalanine et/ou leurs mélanges, leurs précurseurs et/ou leurs produits de dégradation et où ledit précurseur d'arôme additionné au milieu de culture dudit mycélium truffier est présent en large excès supérieur ou égal à 10 mM.

L'invention réside également dans l'utilisation d'au moins un précurseur d'arôme pour induire la production de composés volatils de l'arôme naturel des corps fructifères de truffes (Tuber ssp.) à partir de mycélium truffier en culture.

Comme le démontrent les résultats expérimentaux obtenus (cf. Exemples 1 et 2), l'extrait de malte tel que décrit dans Splivallo et al (2007) contient par exemple des concentrations naturelles d'acides aminés de 130 à 400 fois inférieures aux concentrations utilisées dans la présente invention pour induire les arômes clefs de la truffe (pour les concentrations naturelles d'acides aminés dans de l'extrait de malte voir la page 1648 de la publication de Flückiger-Isler et al., 1993, The Journal of Nutrition).

La présente invention concerne l'utilisation d'acides aminés spécifiques en large excès, non pas pour induire la croissance du mycélium car à très haute concentration les acides aminés peuvent avoir un effet inhibitoire sur la poussée du mycélium, mais au contraire pour stimuler de façon inattendue et spécifique la production de composés clefs de l'arôme de truffe.

### BREVE DESCRIPTION DES FIGURES:

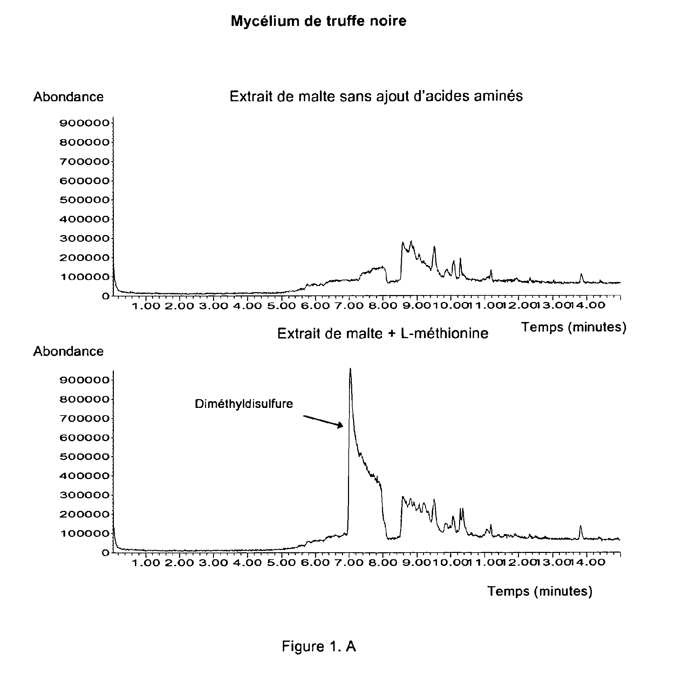

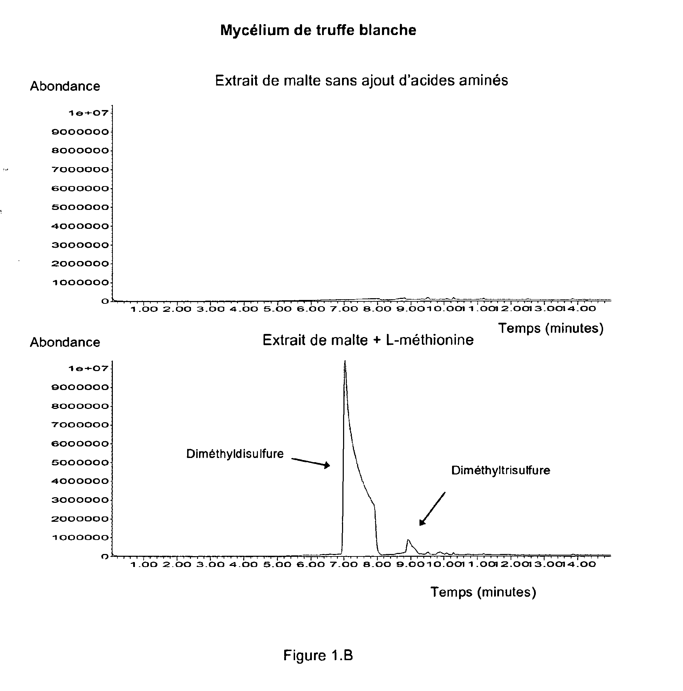

Figures 1. A et 1.B : Chromatogrammes de l'espace de têtes de cultures mycéliennes de truffes blanches et noires supplémentées de L-méthionine. L'extrait de malte contient naturellement des basses concentrations de L-méthionine (0.1mM - Flückiger-Isler et al., 1993). Un excès de 50mM de cet acide aminé induit la production de certains composes soufrés caractéristiques de l'odeur de truffe.

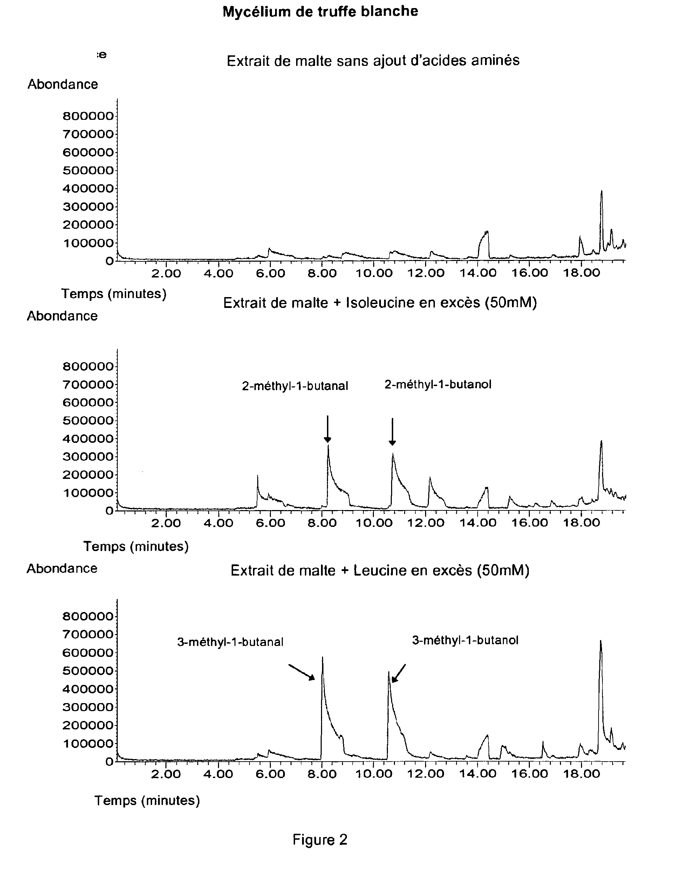

Figure 2 : Chromatogrammes de l'espace de têtes de cultures mycéliennes de truffe blanche supplémentée de leucine et d'isoleucine. L'extrait de malte contient naturellement de basses concentrations en leucine (0.4mM) et d'isoleucine (0.2mM) Flückiger-Isler et al., 1993). Un excès de 50mM de ces acides aminés induit la production de certains composés volatils clefs de la truffe.

### DESCRIPTION DETAILLEE DE L'INVENTION :

Un objet de la présente invention consiste en un procédé de fabrication d'arôme naturel de truffe (Tuber ssp). Le procédé se base sur l'utilisation de mycélium de truffe en culture pure et sur la transformation par ce dernier de précurseurs d'arômes afin d'obtenir les composés caractéristiques de l'arôme des corps fructifères de truffes blanches et noires.

En particulier, le procédé de production d'arômes naturels de truffe (Tuber ssp.) à partir de mycélium truffier en culture selon l'invention, comprend au moins un précurseur d'arôme additionné au milieu de culture dudit mycélium truffier lui conférant ainsi les caractéristiques aromatiques des corps fructifères de truffes. De préférence ledit précurseur d'arôme est sélectionné parmi les acides aminés naturels ou synthétiques de la L-méthionine, la leucine, l'isoleucine, la valine, la phénylalanine et/ou leurs mélanges, leurs précurseurs et/ou leurs produits de dégradations et où ledit précurseur d'arôme additionné au milieu de culture dudit mycélium truffier est présent en large excès supérieur ou égal à 10 mM..

Un arôme naturel est d'origine animale, végétale ou fongique. Il est obtenu exclusivement par des méthodes physiques, microbiologiques ou enzymatiques à partir de matière première d'origines végétales, animales ou fongiques (évidemment non génétiquement modifiées). (http://dictionnaire.sensagent.com/ar%C3%B4me/fr-fr/). Les arômes naturels de truffe sont constitués généralement par des hydrocarbures contenant des groupes alcool, cétones, aldéhydes, esters et des atomes de soufre.

Un **acide aminé** est une molécule organique possédant un squelette carboné et deux fonctions : une amine (-NH₂) et un acide carboxylique (-COOH). Les acides aminés sont les unités structurales de base des protéines. Ils mesurent environ 100 picomètres (pm).

Il existe plus de 100 acides α-aminés présents dans la nature. Les aliments apportent les acides aminés principalement sous forme de protéines. Il existe une très grande variété d'acides aminés, mais seulement 20 sont utilisés dans la synthèse des protéines par les êtres vivants. Sur cette vingtaine, 9 sont indispensables, c'est-à-dire qu'un apport alimentaire est obligatoire ; l'organisme humain ne pouvant les synthétiser, 6 autres sont "conditionnellement" indispensables car leur synthèse endogène n'est pas toujours suffisante pour satisfaire les besoins.

Les acides aminés naturels comprennent l'Alanine (Ala), l'Arginine (Arg), l'Asparagine (Asn), l'Aspartate ou acide aspartique (Asp), la Cystéine (Cys), le Glutamate ou acide glutamique (Glu), la Glutamine (Gln), la Glycine (Gly), l'Histidine (His), l'Isoleucine (Ile), la Leucine (Leu), La Lysine (Lys), la Méthionine (Met), la Phényalanine (Phe), la Proline (Pro), la Sérine (Ser), la Thréonine (Thr), le Tryptophane (Trp), la Tyrosine (Tyr) et la Valine (Val).

Par opposition aux acides aminés naturels, le squelette carboné des acides aminés synthétiques ne se retrouve pas dans la nature. Il est par exemple issu de synthèse organique.

Les acides aminés ont pour précurseurs des métabolites issus des voies métaboliques comme la glycolyse, le cycle des acides tricarboxyliques, ou la voie des pentoses phosphates. Plus précisément ces précurseurs comprennent l'α-ketoglutarate, le 3-phosfoglycerate, l'oxaloacetate, le pyruvate, le phosphoenolpyruvate et l'érythrose 4-phosphate, le ribose 5-phophate et toute autre molécule en amont ou en aval de la voie métabolique conduisant a ces précurseurs.

« Produits de dégradation des acides aminés » : les acides aminés peuvent subir une première dégradation qui enlève le groupement α-aminé soit par transamination, soit par oxydation. L'ion ammonium est récupéré et recyclé pour former un autre acide aminé ou éliminé. Le squelette carboné obtenu après le départ du groupement aminé peut aussi être récupéré pour synthétiser l'acide aminé correspondant ou servir de précurseur à la synthèse des glucides (cas des acides aminés glycoformateurs) ou convertis en acétyl-CoA pour la synthèse des acides gras (cas des acides gras cétogènes).

De préférence, le procédé de production d'arômes naturels de truffe selon l'invention, repose sur l'utilisation d'acides aminés dans le milieu de culture sélectionnés parmi les acides aminés aliphatiques, aromatiques, soufrés ou leurs mélanges.

Préférablement ces acides aminés sont sélectionnés parmi la L-méthionine, la leucine, l'isoleucine, la valine, la phénylalanine et/ou leurs mélanges. En effet, l'inventivité du procédé réside dans l'utilisation des précurseurs d'arômes (L-méthionine, leucine, isoleucine, valine, phénylalanine et/ou leurs mélanges, leurs précurseurs et/ou leurs produits de dégradations) pour induire la production des composés volatils caractéristiques de l'arôme des corps fructifères de truffes. Une dose élevée de ces acides aminés force le mycélium truffier au catabolisme desdits acides aminés ce qui résulte en une concentration plus élevée des molécules volatiles aromatiques recherchées. Selon l'invention, le précurseur d'arôme additionné au milieu de culture dudit mycélium truffier est présent en large excès préférablement supérieur ou égal à 10 mM.

On entend par « large excès » une concentration dudit précurseur d'arôme d'au moins 20 fois, préférablement 100 fois supérieure aux concentrations décrites dans l'extrait de malte (Splivallo et al (2007)) contenant par exemple de basses concentrations en Leucine (0.4mM), en isoleucine (0.2mM) ou en Méthionine (0.1mM) (voir Flückiger-Isler et al., 1993). Ainsi les concentrations naturelles d'acides aminés décrites dans l'extrait de malte sont de 130 à 400 fois inférieures aux concentrations utilisées dans la présente invention pour induire les arômes clefs de la truffe. Les résultats obtenus sont tout à fait inattendus et surprenants (voir par exemple le Tableau 1).

Idéalement, ledit précurseur d'arôme additionné au milieu de culture dudit mycélium truffier est présent dans le milieu de culture à une dose comprise entre 5 et 1000 mM, préférablement en large excès supérieur ou égal à 10 mM, avantageusement à une dose comprise entre 10 et 1000 mM, préférablement entre 10 et 500 mM, et plus préférablement de 50 à 500 mM.

En particulier dans le cas de la L-méthionine ou de la valine additionnées au milieu de culture dudit mycélium truffier la dose utilisée est préférablement supérieure ou égale à 50 mM.

Dans le cas de la leucine ou de l'isoleucine additionnées au milieu de culture dudit mycélium truffier la dose utilisée est préférablement supérieure ou égale à 100 mM.

Dans le cas de la phénylalanine ou l'acide 2-oxo-4-méthylthiobutyrique, produit de dégradation de la L-méthionine, additionnés au milieu de culture dudit mycélium truffier la dose utilisée est préférablement supérieure ou égale à 10 mM.

Avantageusement, les acides aminés sont sélectionnés parmi la L-méthionine, l'isoleucine leurs précurseurs, leurs produits de dégradations et/ou leurs mélanges.

Suivant un mode préféré de réalisation de l'invention, le mycélium truffier en culture provient d'au moins une des espèces suivantes : *Tuber melanosporum*, *Tuber magnatum*, *Tuber aestivum*, *Tuber uncinatum*, *Tuber brumale*, *Tuber borchii*, *Tuber mesentericum*, ou *Tuber indicum* et/ou leurs mélanges.

Par ailleurs, la culture de mycélium truffier peut également contenir en plus des bactéries et/ou levures, hôtes naturels des corps fructifères desdites truffes. L'addition de ces symbiotes en cultures permettra d'améliorer le rendement et la production des molécules volatiles aromatiques recherchées. La population bactérienne hôte des corps fructifères et du mycélium de truffes blanches *(Tuber magnatum* et *Tuber borchii*) a été décrite par Barbieri et al, (« Phylogenetic Characterization and In Situ Detection of a Cytophaga-Flexibacter-Bacteroides Phylogroup Bacterium in Tuber borchii Vittad. Ectomycorrhhizal Mycelium » Applied and Environmental Microbiology, Nov. 2000, Vol.66, No. 11, p. 5035-5042; "New evidence for bacterial diversity in the ascoma of the ectomycorrhizal fungus Tuber borchii Vittad. » FEMS Mircobiology Letters 247 (2005) 23-25; and « Occurrence and diversity of bacterial communities in Tuber magnatum during truffle maturation » Environmental Microbiology (2007) 9(9), 2234-2246.). Parmi elles on peut citer les alpha-Proteobactéries tels que le groupe Sinorhizobium/Ensifer avec les espèces *Rhizobium* et *Bradyrhizobium*, les béta-Proteobactéries, les gamma- Proteobactéries, les Bacteroidetes, les Firmicutes, les Actinobactériesn ainsi que les souches Pseudomonas ou les bactéries formant des spores telles que les espèces *Micrococcus, Moraxella, Corynebacterium* et *Staphylococcus.* L'arôme de truffe est principalement produit par le mycélium lui-même, mais les bactéries et microbes hôtes que renferment les corps fructifères peuvent également participer à la fabrication de ce cocktail de molécules volatiles.

Selon le procédé de l'invention la culture des mycéliums truffiers en présence d'au moins un précurseur d'arôme peut être maintenue pendant au moins 7 jours à une température comprise entre 10 et 30 °C. Cependant on pourra maintenir les mycéliums truffiers en présence d'au moins un précurseur d'arôme pendant 1 mois voire deux mois ou plus à une température de culture préférablement comprise entre 15 et 20 °C.

L'arôme naturel de truffe obtenu selon la présente invention est une molécule volatile comprenant le diméthyle sulfure, diméthyle disulfure, 2-méthyle butanal, 2-méthylpropanal, 3-méthyle-1-butanal, 2-phényléthanol, 2,4-dithiapentane, 1-octene-3-ol, 3-octanone, leurs dérivés oxydés ou réduits et/ou leurs mélanges.

Selon un mode de réalisation préféré de l'invention, ledit précurseur d'arôme additionné au milieu de culture dudit mycélium truffier comprend en outre de l'acide linoléique, qui confère à l'arôme de truffe une légère note fongique.

La présente invention concerne également l'utilisation d'au moins un précurseur d'arôme pour induire la production de composés volatils de l'arôme naturel des corps fructifères de truffes (Tuber ssp.) à partir de mycélium truffier en culture. Préférablement, ledit précurseur d'arôme est sélectionné parmi les acides aminés naturels ou synthétiques de la L-méthionine, la leucine, l'isoleucine, la valine, la phénylalanine et/ou leurs mélanges, leurs précurseurs et/ou leurs produits de dégradations et où ledit précurseur d'arôme additionné au milieu de culture dudit mycélium truffier est présent en large excès supérieur ou égal à 10 mM.

Préférablement, ledit précurseur d'arôme additionné au milieu de culture dudit mycélium truffier est présent à une dose comprise entre 10 et 1000 mM, préférablement entre 10 et 500 mM, et plus préférablement de 50 à 500 mM ou aux doses spécifiques pour chaque acide aminé telles que décrites plus haut pour le procédé de production d'arômes naturels de truffe (Tuber ssp.) à partir de mycélium truffier en culture.

De manière encore plus préférée, les acides aminés sont sélectionnés parmi la L-méthionine, l'isoleucine leurs précurseurs, leurs produits de dégradations et/ou leurs mélanges.

Un autre objet de l'invention consiste en l'utilisation de mycélium de truffes (Tuber ssp.) en culture en combinaison avec des bactéries et/ou levures, hôtes naturels des corps fructifères desdites truffes afin de générer les molécules volatiles caractéristiques de l'arôme de la truffe. Lesdits mycéliums de truffes (Tuber ssp.) en culture en combinaison avec lesdites bactéries et/ou levures, hôtes naturels des corps fructifères desdites truffes sont cultivés selon le procédé de la présente invention. Lesdites bactéries et/ou levures, hôtes naturels des corps fructifères des dites truffes sont décrites plus haut.

On préfèrera le mycélium truffier en culture provenant d'au moins une des espèces suivantes : *Tuber melanosporum*, *Tuber magnatum*, *Tuber aestivum*, *Tuber uncinatum*, *Tuber brumale*, *Tuber borchii*, *Tuber mesentericum,* ou *Tuber indicum* et/ou leurs mélanges.

Selon un mode de réalisation préféré, le milieu de culture dudit mycélium truffier pourra contenir en plus des bactéries et/ou levures, hôtes naturels des corps fructifères (telles que décrits plus haut) desdites espèces de truffes.

Un objectif essentiel de l'invention est aussi de fabriquer un produit aromatique stable à odeur et goût de truffe fraîche, se prêtant à un conditionnement industriel sans altération de qualité, et à une distribution en toute période de l'année. Il est également essentiel de fournir un produit aromatique dont la qualité soit apte à satisfaire les connaisseurs et professionnels.

Les produits aromatiques à odeur et à goût naturel du corps fructifère de truffe, comprennent les molécules volatiles naturelles concentrées extraites du mycélium truffier selon l'invention.

Le produit aromatique conforme à l'invention peut être fabriqué sous forme concentrée, en mélangeant directement les composés en proportions appropriées. Toutefois, pour permettre une utilisation directe et plus facile du produit, ces composés sont de préférence dilués dans un solvant alimentaire ou un vecteur liquide non toxique à volatilité élevée, apte à les disperser en milieu homogène ou hétérogène.

On peut en particulier utiliser comme solvant une huile alimentaire afin d'obtenir un produit aromatique se prêtant à une utilisation directe par le consommateur, notamment pour parfumer des aliments au moment de leur préparation. On peut aussi utiliser comme vecteur volatil du protoxyde d'azote ou du trichlorofluorométhane afin notamment de réaliser des imprégnations industrielles de supports solides.

Dans le cas le plus courant d'un usage alimentaire, le rapport pondéral de dilution des composés est avantageusement compris entre 100 et 10 000.

De manière surprenante, en faisant croître le mycélium de truffe dans un milieu de culture additionné de l'acide aminé L-méthionine on obtient des produits soufrés caractéristiques de la truffe, tel que le diméthylsulfure ou le diméthyldisulfure. De même l'addition de l'acide aminé isoleucine au milieu de culture induit la production du composé volatile 2-méthyle butanal. L'utilisation des deux précurseurs d'arômes L-méthionine et isoleucine permet d'obtenir les molécules volatiles qui sont la base de l'arôme de truffe. Par ailleurs, l'utilisation d'autres acides aminés tels que la leucine, la valine, la phénylalanine permet la production de 2-méthylpropanal et de 3-méthyle-1-butanol et de 2-phényléthanol, molécules volatiles qui combinées avec le diméthylsulfure, diméthyldisulfure et le 2-méthylbutanal améliorent la qualité et complexité de l'arôme de truffe. Les molécules volatiles ainsi obtenues peuvent être combinées dans différentes proportions afin de reproduire un arôme naturel de truffe blanche et noire. L'invention s'étend à l'utilisation dudit produit afin de conférer l'arôme de la truffe à des supports solides et liquides essentiellement dans l'industrie alimentaire et l'industrie des arômes.

D'autres caractéristiques et avantages de la présente invention apparaîtront au cours des exemples suivants de réalisation, donnés bien entendu à titre illustratif et non limitatif.

### EXEMPLE 1 :

Le mycélium de truffes blanches (par exemple *Tuber borchii* ou *Tuber magnatum*) ou noires (par exemple *Tuber melanosporum*) est préalablement cultivé sous conditions stériles en boîtes de Pétri sur un milieu propice à la croissance (par exemple milieu solide à base d'agar (10g/l) contenant de l'extrait de malte à 1% ou du "potato dextrose agar" (15g/l) avec un pH ajusté entre 6.5-7.0, ce jusqu'à ce que le diamètre de la colonie mycélienne atteigne 1-2 centimètres (quelques semaines à quelques mois en fonction de l'espèce de truffe)

A ce stade, on transfert du mycélium provenant du bord de la colonie (par exemple 0.2 cm²) dans un milieu de culture liquide tel que de l'extrait de malt à 1.5%, pH 6.5-7.0. Le milieu de culture est tenu tel quel ou supplémenté avec de la méthionine (concentration finale de l'ordre de 50mM) afin de comparer l'arôme produit par le mycélium croissant sur l'extrait de malte pur et sur l'extrait de malte supplémenté de méthionine. Le milieu ainsi inoculé avec le mycélium de truffe doit être renfermé dans un contenant hermétique afin de ne pas perdre les molécules volatiles produites au fur et à mesure de la croissance du mycélium.

Après 1 mois de croissance à 15-20 °C dans un contenant de 20 ml, les molécules volatiles induites par les précurseurs d'arômes sont détectables au nez humain et présentent les caractéristiques des composés clefs de la truffe telle que par exemple les composés soufrés. L'odeur des cultures mycéliennes de truffe blanche et noire croissant sur l'extrait de malte non supplémenté en méthionine s'apparente essentiellement à l'arôme de l'extrait de malte, avec une petite odeur fongique (champignon de Paris) ne rappelant toutefois en rien l'odeur de la truffe. Au contraire pour le mycélium de truffe blanche et noire supplémenté en méthionine on détecte au nez des arômes soufrés de fermentation telle l'odeur de chou (truffe noire) avec une légère odeur d'oeuf pourri (truffe blanche).
Les analyses par chromatographie gazeuse et spectrométrie de masse (GC/MS) confirment les résultats organoleptiques décrits ci-dessus (Figures 1 A et 1 B). En effet l'ajout de méthionine (50mM concentration finale) induit chez la truffe noire une importante production de dimethyldisulfure, composé volatil à l'odeur caractéristique de chou. Ce même acide aminé induit chez la truffe blanche la production de diméthyle de disulfure mais aussi de dimethyl trisulfure (composé volatil à l'odeur caractéristique d'oeuf pourri).

### EXEMPLE 2 :

Le mycélium de truffes blanches est préalablement cultivé sous conditions stériles en boîtes de Pétri sur un milieu propice à la croissance (par exemple milieu solide à base d'agar (10g/l) contenant du "potato dextrose agar" (15g/l) avec un pH ajusté entre 6.5-7.0, ce jusqu'à ce que le diamètre de la colonie mycélienne atteigne 1-2 centimètres.

Les colonies sont transférées en milieu liquide (50ml dans un contenant Erlenmeyer de 250ml) et broyées à l'aide d'un mixer stérile. On cultive le mycélium ainsi obtenu à 23°C et en agitation (130 tours par minute, rpm) jusqu'à l'obtention d'une biomasse importante (~10 grammes de mycélium par Erlenmeyer). On transfert ensuite 2-3 grammes de mycélium ainsi obtenu dans des petits contenants hermétiques supplémentés ou non de Leucine ou d'Isoleucine (60mM concentration finale dans de l'extrait de malte à 1%). Au bout de 3 semaines, on procède aux tests organoleptiques en parallèle aux analyses chromatographiques par GC/MS (Chromatographie en phase gazeuse/ Spectrométrie de masse).
Au nez le mycélium croissant sur l'extrait de malte non supplémenté d'acides aminés a une légère odeur de « champignon de Paris ». Le mycélium croissant sur l'extrait de malte supplémenté d'isoleucine dégage quant à lui un nez complexe de chocolat et de fruits exotiques (caractéristique de la production de 2-méthylbutanal et 2-méthylbutanol - voir Figure 2), quant au mycélium croissant en présence de leucine, il dégage une légère odeur de whisky fumé, indiquant la présence de 3-méthylbutanal et 3-méthylbutanol - Figure 2).

Les composés volatils ainsi obtenus peuvent ensuite être extraits et combinés entre eux (par exemple avec les composés soufrés de l'exemple 1) dans les proportions reproduisant l'arôme naturel de truffe. Alternativement le mycélium peut aussi être utilisé directement pour la préparation de produits aromatiques et/ou alimentaires.

### EXEMPLE 3 :

On cultive du mycélium de truffe noire (par exemple T. melanosporum, T. brumale ou T. indicum) selon l'un des procédés décrits sous l'exemple 1 ou 2, avec le milieu de culture supplémenté d'acides aminés (L-méthionine, isoleucine, leucine, valine, phénylalanine) à une concentration finale de 100mM.

Apres 2 mois de culture, les composés volatils sont extraits dans un support approprié (par exemple de l'huile d'olive ou de la crème) et combinés entre eux pour obtenir une odeur caractéristique de truffe noire. Par exemple, un extrait de truffe contenant une large proportion de composés soufrés rappelle l'odeur de la truffe noire du Périgord (T. melanosporum) tandis qu'une proportion largement inférieure de composés soufrés rappelle l'odeur moins intense de la truffe de Chine Tuber indicum.

Le produit ainsi obtenu peut par ailleurs être encore amélioré en faisant croître le mycélium de truffe avec d'autres précurseurs d'arômes tel que de l'acide linoléique qui induit par exemple la production de 1-octen-3-ol, molécule volatile ayant une odeur caractéristique de champignon de Paris. En plus des molécules volatiles décrites ci-dessus, le bouquet aromatique obtenu avec l'addition du 1-octen-3-ol reproduit l'odeur de la truffette blanche d'Italie T. borchii.

### EXEMPLE 4 :

On cultive du mycélium de truffe noire ou blanche comme décrit dans l'exemple 2 pendant 2 mois jusqu'à l'obtention d'une importante biomasse et en présence d'acides aminés L-méthionine, isoleucine, leucine, valine, phénylalanine à une concentration de 80mM. Pendant ces 2 mois de cultures, les composés volatils sont en continu extraits des cultures mycéliennes et emprisonnés dans un support liquide (huile végétale). Apres 2 mois de culture, on transfert le mycélium supplémenté de méthionine (sans le milieu liquide) dans un récipient hermétique et stérile et l'on inocule le mycélium avec des bactéries et levures préalablement isolées du corps fructifères de truffes blanches (T. magnatum). Apres 2 semaines de cultures on collecte les volatils ainsi obtenus dans le même support liquide utilisé au préalable. Cet extrait a un nez caractéristique soufré, astringent et à forte odeur de chou et d'ail. Combinés avec les volatils mycéliens dans des proportions exactes, l'arôme ainsi obtenu s'apparente à celui de la truffe blanche d'Alba.

### Exemple 5 :

On cultive du mycélium de truffe blanche comme décrit dans l'exemple 2 pendant 2 mois jusqu'à l'obtention d'une importante biomasse. Le mycélium ainsi obtenu est broyé à l'aide d'un mixer stérile et transféré dans des récipients hermétiques contenant soit de l'extrait de malte pur soit de l'extrait de malte additionné des composés suivants (acides aminés : L-methionine, leucine, isoleucine, valine, phénylalanine et la cystéine comme témoin négatif ou encore l'acide 2-oxo-4-méthylthiobutyrique, produit de dégradation de la L-méthionine). La concentration de ces composés est comprise entre 1mM et 400mM comme l'indique le tableau 1. On cultive le mycélium sur ces différents milieux et après 2 semaines un panel d'experts évalue les caractères sensoriels (odeur) de chaque récipient.

Les résultats sensoriels sont décrits dans le tableau 1.
- Au nez, on note tout d'abord que le mycélium cultivé sur de l'extrait de malte pur (non additionné d'acides aminés) dégage une odeur de «malte et de champignon » (Tableau 1).
- La cystéine qui sert ici de témoin négatif ne stimule en rien la production d'arômes de truffe.
- Les autres acides aminés (L-methionine, valine, leucine, isoleucine, phénylalanine) et le produit de dégradation de la L-methionine, l'acide 2-oxo-4-méthylthiobutyrique, produisent quant à eux des arômes caractéristiques de la truffe uniquement s'ils sont présents à des concentrations largement supérieures à leurs concentrations naturelles dans l'extrait de malte. Ces concentrations varient en fonction des précurseurs d'arômes (acides aminés ou produits de dégradation) et sont comprises entre 10mM et 400mM selon le tableau 1.

**Tableau 1 - Résultats de l'évaluation sensorielle**

| **Concentration d'acide aminé ajoutée à de l'extrait de malte** | **Excès par rapport à l'extrait de malte** | **Description de l'arôme** | **S'apparente à S'apparente la truffe?** (--- =non; √=oui) |
|---|---|---|---|
| ***Extrait de malte pur*** | | | |
| Cf. Flückiger-Isler et al. | 0 | malte, fongique | --- |
| | | | |

| ***Cystéine (témoin négatif)*** | | | |
|---|---|---|---|
| 1 mM | 140 | malte, fongique | --- |
| 10 mM | 1400 | malte, fongique | --- |
| 50 mM | 7000 | malte, fongique | --- |
| 100 mM | 14000 | malte, fongique | --- |
| 200mM | 28000 | malte, fongique | --- |
| 400mM | 42000 | malte, fongique | --- |
| | | | |

| ***L-Méthionine*** | | | |
|---|---|---|---|
| 1 mM | 100 | malte, fongique | --- |
| 10 mM | 1000 | légère note soufrée | --- |
| 50 mM | 5000 | chou, oeuf pourri | √ |
| 100 mM | 10000 | chou intense, ail | √ |
| | | | |

| ***Leucine*** | | | |
|---|---|---|---|
| 1 mM | 30 | malte, fongique | --- |
| 10 mM | 260 | malte, fongique | --- |
| 50 mM | 1300 | whisky | --- |
| 100 mM | 2600 | whisky aux notes fumées | √ |
| 200mM | 5200 | whisky aux notes fumées, intense | √ |
| | | | |

| ***Isoleucine*** | | | |
|---|---|---|---|
| 1 mM | 50 | malte, fongique | --- |
| 10 mM | 500 | malte, fongique | --- |
| 50 mM | 2500 | malte, fongique | --- |
| 100 mM | 3000 | âcre, fruité | √ |
| 200mM | 6000 | âcre, fruité | √ |
| | | | |

| ***Valine*** | | | |
|---|---|---|---|
| 1 mM | 30 | malte, fongique | --- |
| 10 mM | 300 | âcre, peu intense | --- |
| 50 mM | 1500 | âcre, mordant | √ |
| 100 mM | 3000 | âcre, mordant | √ |
| 200mM | 6000 | âcre, mordant | √ |
| 400mM | 12000 | âcre, mordant, fort | √ |
| | | | |

| ***Phénylalanine*** | | | |
|---|---|---|---|
| 1 mM | 50 | fongique, très légère note de rose | --- |
| 10 mM | 500 | rose peu intense | √ |
| 50 mM | 2400 | rose intense | √ |
| 100 mM | 4800 | rose intense | √ |
| | | | |

| ***2-oxo-4-methylthiobutyric acide (produit de dégradation de la L-méthionine)*** | | | |
|---|---|---|---|
| 1mM | --- | légère note soufrée | --- |
| 10mM | --- | chou, oeuf pourri | √ |
| 50mM | --- | chou intense, ail | √ |

### REFERENCES :

**Delmas M, Gaset A, Montant C, Pebeyre JP, Talou T** (1986)
   Procédé de fabrication d un produit aromatique à odeur et goût de truffe noire, produit et corps aromatisés obtenus. Demande de brevet français FR 86 10871 et demande de brevet Européen No EP 0257666.
IT 1215936B (SENTOSA S.A.S MILANO)
Fauconnet C, Delher G (1998) Influence des facteurs climatiques sur la production des truffes en Quercy. Le Trufficulteur Français 24(3):19-21.
Fields B (1997) Meet the professor. Local flavor. Nov. 2007 pp32-33.
Flückiger-Isler R, Mörikofer-Zwez S, Kahn JM, Walter P (1994). Dietary components of malt extract such as maltodextrins, proteins and inorganic salts have distinct effects on glucose uptake and glycogen concentrations in rats. The Journal of Nutrition pp1647-1653
Hall I, Yun W (2001) Truffles and other edible mycorrhizal mushrooms-some new crops for the Southern Hemisphere. Edible Mycorrhizal Mushrooms and their cultivation. Hall I, Yun W, Danell E, Zambonelli A (eds). Proceedings of the second International Conference on Edible Mycorrhizal Mushrooms. New Zealand. pp 1-7.
Splivallo R, Bossi S, Maffei M, Bonfante P (2007a) Discrimination of truffle fruiting body versus mycelial aromas by stir bar sorptive extraction. Phytochemistry 68: 2584-98.
Tirillini B, Verdelli G, Paolocci F, Ciccioli P, Frattoni M (2000) The volatile organic compounds from the mycelium of Tuber borchii Vitt. Phytochemistry 55:983-985.
Barbieri et al, « Phylogenetic Characterization and In Situ Detection of a Cytophaga-Flexibacter-Bacteroides Phylogroup Bacterium in Tuber borchii Vittad. Ectomycorrhhizal Mycelium » Applied and Environmental Microbiology, Nov. 2000, Vol.66, No. 11, p. 5035-5042; « New evidence for bacterial diversity in the ascoma of the ectomycorrhizal fungus Tuber borchii Vittad. » FEMS Mircobiology Letters 247 (2005) 23-25; and « Occurrence and diversity of bacterial communities in Tuber magnatum during truffle maturation » Environmental Microbiology (2007) 9(9), 2234-2246.

## Revendications

1. Procédé de production d'arômes naturels de truffe (Tuber ssp.) à partir de mycélium truffier en culture, comprenant au moins un précurseur d'arôme additionné au milieu de culture dudit mycélium truffier lui conférant ainsi les caractéristiques aromatiques des corps fructifères de truffes et **caractérisé en ce que** ledit précurseur d'arôme est sélectionné parmi les acides aminés naturels ou synthétiques de la L-méthionine, la leucine, l'isoleucine, la valine, la phénylalanine et/ou leurs mélanges, leurs précurseurs et/ou leurs produits de dégradations et où ledit précurseur d'arôme additionné au milieu de culture dudit mycélium truffier est présent en large excès supérieur ou égal à 10 mM.

2. Procédé de production d'arômes naturels de truffe selon la revendication 1, **caractérisé en ce que** ledit précurseur d'arôme additionné au milieu de culture dudit mycélium truffier est présent à une dose comprise entre 10 et 1000 mM.

3. Procédé de production d'arômes naturels de truffe selon l'une quelconque des revendications 1 à 2, **caractérisé en ce que** ledit précurseur d'arôme additionné au milieu de culture dudit mycélium truffier est présent à une dose comprise entre 10 et 500 mM.

4. Procédé de production d'arômes naturels de truffe selon l'une quelconque des revendications 1 à 3, **caractérisé en ce que** ledit précurseur d'arôme additionné au milieu de culture dudit mycélium truffier est présent à une dose comprise entre 50 et 500 mM.

5. Procédé de production d'arômes naturels de truffe selon la revendication 1, **caractérisé en ce que** la L-méthionine ou la valine additionnées au milieu de culture dudit mycélium truffier sont présentes à une dose supérieure ou égale à 50 mM.

6. Procédé de production d'arômes naturels de truffe selon la revendication 1, **caractérisé en ce que** la leucine ou l'isoleucine additionnées au milieu de culture dudit mycélium truffier sont présentes à une dose supérieure ou égale à 100 mM.

7. Procédé de production d'arômes naturels de truffe selon la revendication 1, **caractérisé en ce que** la phénylalanine ou l'acide 2-oxo-4-méthylthiobutyrique, produit de dégradation de la L-méthionine, additionnés au milieu de culture dudit mycélium truffier sont présents à une dose supérieure ou égale à 10 mM.

8. Procédé de production d'arômes naturels de truffe selon la revendication 1, **caractérisé en ce que** les acides aminés sont sélectionnés parmi la L-méthionine, l'isoleucine, leurs précurseurs, leurs produits de dégradations et/ou leurs mélanges.

9. Procédé de production d'arômes naturels de truffe selon l'une quelconque des revendications 1 à 8, **caractérisé en ce que** le mycélium truffier en culture provient d'au moins une des espèces suivantes : *Tuber melanosporum, Tuber magnatum*, *Tuber aestivum*, *Tuber uncinatum*, *Tuber brumale*, *Tuber borchii*, *Tuber mesentericum,* ou *Tuber indicum.*

10. Procédé de production d'arômes naturels de truffe selon l'une quelconque des revendications 1 à 9, **caractérisé en ce que** la culture de mycélium truffier contient en plus des bactéries et/ou levures, hôtes naturels des corps fructifères desdites truffes.

11. Procédé de production d'arômes naturels de truffe selon l'une quelconque des revendications 1 à 10, **caractérisé en ce que** lesdits mycéliums truffiers sont cultivés en présence d'au moins un précurseur d'arôme sont maintenus en culture pendant au moins 7 jours à une température comprise entre 10 et 30 °C.

12. Procédé de production d'arômes naturels de truffe selon la revendication 11, **caractérisé en ce que** la température de culture est comprise entre 15 et 20 °C.

13. Procédé de production d'arômes naturels de truffe selon l'une quelconque des revendications 1 à 12, **caractérisé en ce que** l'arôme naturel de truffe est une molécule volatile comprenant le diméthyle sulfure, diméthyle disulfure, diméthyle trisulfure, 2-méthyle butanal, 2-méthylpropanal, 3-méthyle-1-butanal, 2-phényléthanol, 2,4-dithiapentane, 1-octene-3-ol, 3-octanone, leurs dérivés oxydés ou réduits et/ou leurs mélanges.

14. Procédé de production d'arômes naturels de truffe selon l'une quelconque des revendications 1 à 13, **caractérisé en ce que** ledit précurseur d'arôme additionné au milieu de culture dudit mycélium truffier comprend en outre de l'acide linoléique.

15. Utilisation d'au moins un précurseur d'arôme pour induire la production de composés volatils de l'arôme naturel des corps fructifères de truffes (Tuber ssp.) à partir de mycélium truffier en culture, **caractérisée en ce que** ledit précurseur d'arôme est sélectionné parmi les acides aminés naturels ou synthétiques de la L-méthionine, la leucine, l'isoleucine, la valine, la phénylalanine et/ou leurs mélanges, leurs précurseurs et/ou leurs produits de dégradations et où ledit précurseur d'arôme additionné au milieu de culture dudit mycélium truffier est présent en large excès supérieur ou égal à 10 mM.

16. Utilisation selon la revendication 15, **caractérisée en ce que** ledit précurseur d'arôme additionné au milieu de culture dudit mycélium truffier est présent à une dose comprise entre 10 et 1000 mM.

17. Utilisation selon la revendication 15, **caractérisée en ce que** les acides aminés sont sélectionnés parmi la L-méthionine, l'isoleucine, leurs précurseurs, leurs produits de dégradations et/ou leurs mélanges.

18. Utilisation de mycélium de truffes (Tuber ssp.) en culture en combinaison avec des bactéries et/ou levures, hôtes naturels des corps fructifères desdites truffes afin de générer les molécules volatiles caractéristiques de l'arôme de la truffe, **caractérisée en ce que** lesdits mycéliums de truffes (Tuber ssp.) en culture en combinaison avec lesdites bactéries et/ou levures, hôtes naturels des corps fructifères desdites truffes sont cultivés selon le procédé des revendications 1 à 14.

19. Utilisation selon la revendication 18, **caractérisée en ce que** le mycélium truffier en culture provient d'au moins une des espèces suivantes : *Tuber melanosporum*, *Tuber magnatum*, *Tuber aestivum*, *Tuber uncinatum*, *Tuber brumale*, *Tuber borchii*, *Tuber mesentericum*, ou *Tuber indicum.*

## Patentansprüche

1. Herstellungsverfahren von natürlichen Trüffelaromen aus Trüffelmyzel in Kultur, mit mindestens einem dem Kulturmilieu des besagten Trüffelmyzels zugegebenen Aromavorläuferstoff, wodurch diesem auch die aromatischen Eigenschaften des Fruchtkörpers von Trüffeln übertragen werden, **dadurch gekennzeichnet, dass** der besagte Aromavorläuferstoff ausgewählt wird aus: natürlichen oder künstlichen/synthetischen Aminosäuren von L-Methionin, Leucin, Isoleucin, Valin, Phenylalanin und/oder ihren Mischungen, ihren Vorläuferstoffen, und/oder ihren Abbauprodukten, und worin der besagte dem Kulturmilieu des besagten Trüffelmyzels zugegebene Aromavorläuferstoff im Überfluss von mehr als oder gleich 10mM vorhanden ist.

2. Herstellungsverfahren von natürlichen Trüffelaromen gemäss Anspruch 1, **dadurch gekennzeichnet, dass** der besagte dem Kulturmilieu des besagten Trüffelmyzels zugegebene Aromavorläuferstoff in einer Dosis zwischen 10 und 1000mM vorhanden ist.

3. Herstellungsverfahren von natürlichen Trüffelaromen gemäss irgendeinem der Ansprüche 1 bis 2, **dadurch gekennzeichnet, dass** der besagte dem Kulturmilieu des besagten Trüffelmyzels zugegebene Aromavorläuferstoff in einer Dosis zwischen 10 und 500mM vorhanden ist.

4. Herstellungsverfahren von natürlichen Trüffelaromen gemäss irgendeinem der Ansprüche 1 bis 3, **dadurch gekennzeichnet, dass** der besagte dem Kulturmilieu des besagten Trüffelmyzels zugegebene Aromavorläuferstoff in einer Dosis zwischen 50 und 500mM vorhanden ist.

5. Herstellungsverfahren von natürlichen Trüffelaromen gemäss Anspruch 1, **dadurch gekennzeichnet, dass** das dem Kulturmilieu des besagten Trüffelmyzels zugegebene L-Methionin oder Valin in einer Dosis höher als oder gleich 50mM vorhanden ist.

6. Herstellungsverfahren von natürlichen Trüffelaromen gemäss Anspruch 1, **dadurch gekennzeichnet, dass** das dem Kulturmilieu des besagten Trüffelmyzels zugegebene Leucin oder Isoleucin in einer Dosis höher als oder gleich 100mM vorhanden ist.

7. Herstellungsverfahren von natürlichen Trüffelaromen gemäss Anspruch 1, **dadurch gekennzeichnet, dass** das dem Kulturmilieu des besagten Trüffelmyzels zugegebene Phenylalanin oder 2-oxo-4- Methylthiobuttersäure, Abbauprodukt von L-Methionin, in einer Dosis höher als oder gleich 10mM vorhanden ist.

8. Herstellungsverfahren von natürlichen Trüffelaromen gemäss Anspruch 1, **dadurch gekennzeichnet, dass** die Aminosäuren ausgewählt werden aus: L-Methionin, Isoleucin, ihren Vorläuferstoffen, ihren Abbauprodukten und/oder ihren Mischungen.

9. Herstellungsverfahren von natürlichen Trüffelaromen gemäss irgendeinem der Ansprüche 1 bis 8, **dadurch gekennzeichnet, dass** das Trüffelmyzel aus mindestens einer der folgenden Arten stammt: *Tuber melanosporum*, *Tuber magnatum*, *Tuber aestivum*, *Tuber uncinatum*, *Tuber brumale*, *Tuber borchii*, *Tuber mesentericum* oder *Tuber indicum.*

10. Herstellungsverfahren von natürlichen Trüffelaromen gemäss irgendeinem der Ansprüche 1 bis 9, **dadurch gekennzeichnet, dass** die Kultur des Trüffelmyzels ausserdem Bakterien und/oder Hefen, natürliche Wirte der Fruchtkörper der besagten Trüffel, enthält.

11. Herstellungsverfahren von natürlichen Trüffelaromen gemäss irgendeinem der Ansprüche 1 bis 10, **dadurch gekennzeichnet, dass** die besagten Trüffelmyzel in Gegenwart mindestens eines Vorläuferstoffs kultiviert werden, während mindestens 7 Tagen bei einer Temperatur zwischen 10 und 30 °C in Kultur gehalten werden.

12. Herstellungsverfahren von natürlichen Trüffelaromen gemäss Anspruch 11, **dadurch gekennzeichnet, dass** die Temperatur der Kultur zwischen 15 und 20 °C liegt.

13. Herstellungsverfahren von natürlichen Trüffelaromen gemäss irgendeinem der Ansprüche 1 bis 12, **dadurch gekennzeichnet, dass** das natürliche Trüffelaroma ein flüchtiges Molekül ist, enthaltend: Dimethylsulfid, Dimethyldisulfid, Dimethyltrisulfid, 2-Methylbutanal, 2-Methylpropanal, 3-Methyl-1-butanal, 2-Phenylethanol, 2,4-Dithiapentan, 1-Octen-3-ol, 3-Octanone, ihre oxidierten oder reduzierten Derivate und/oder ihre Mischungen.

14. Herstellungsverfahren von natürlichen Trüffelaromen gemäss irgendeinem der Ansprüche 1 bis 13, **dadurch gekennzeichnet, dass** der besagte dem Kulturmilieu des besagten Trüffelmyzels zugegebene Aromavorläuferstoff zudem Linolsäure enthält.

15. Verwendung mindestens eines Aromavorläuferstoffs, um die Erzeugung flüchtiger Verbindungen von natürlichem Aroma des Fruchtkörpers von Trüffeln (Tuber ssp.) basierend auf Trüffelmyzel in Kulturen zu bewirken, **dadurch gekennzeichnet, dass** der besagte Aromavorläuferstoff ausgewählt wird aus den natürlichen oder synthetischen Aminosäuren von L-Methionin, Leucin, Isoleucin, Valin, Phenylalanin und/oder ihren Mischungen, ihren Vorläuferstoffen und/oder ihren Abbauprodukten, und worin der besagte dem Kulturmilieu des besagten Trüffelmyzels zugegebene Aromavorläuferstoff im Überfluss von mehr als oder gleich 10mM vorhanden ist.

16. Verwendung gemäss Anspruch 15, **dadurch gekennzeichnet, dass** der besagte dem Kulturmilieu des besagten Trüffelmyzels zugegebene Aromavorläuferstoff in einer Dosis zwischen 10 und 1000mM vorhanden ist.

17. Verwendung gemäss Anspruch 15, **dadurch gekennzeichnet, dass** die Aminosäuren ausgewählt werden aus: L-Methionin, Isoleucin, ihren Vorläuferstoffen, ihren Abbauprodukten und/oder ihren Mischungen.

18. Verwendung von Trüffelmyzel (Tuber ssp.) in Kultur in Verbindung mit Bakterien und/oder Hefen, natürlichen Wirten der Fruchtkörper der besagten Trüffel, um die für das Aroma der Trüffel charakteristischen flüchtigen Verbindungen zu erzeugen, **dadurch gekennzeichnet, dass** die besagten Trüffelmyzel (Tuber ssp.) in Kultur in Verbindung mit den besagten Bakterien und/oder Hefen, natürlichen Wirten der Fruchtkörper der besagten Trüffel, gemäss dem Verfahren der Ansprüche 1 bis 14 kultiviert werden.

19. Verwendung gemäss Anspruch 18, **dadurch gekennzeichnet, dass** das Trüffelmyzel (Tuber ssp.) in Kultur aus mindestens einer der folgenden Arten stammt: *Tuber melanosporum*, *Tuber magnatum*, *Tuber aestivum*, *Tuber uncinatum*, *Tuber brumale*, *Tuber borchii*, *Tuber mesentericum* oder *Tuber indicum.*

## Claims

1. Method for the production of truffle (Tuber ssp.) natural aromas from cultured truffle mycelium, comprising at least one aroma precursor added to the culture medium of said truffle mycelium, thus bestowing on it the aromatic characteristics of the truffle sporocarps and **characterized in that** said aroma precursor is selected from among natural or synthetic amino acids of L-methionine, leucine, isoleucine, valine, phenylalanine and/or their mixtures, their precursors and/or their degradation products, and wherein said aroma precursor added to the culture medium of said truffle mycelium is present in large excess greater than or equal to 10 mM.

2. Method for the production of truffle natural aromas according to claim 1, **characterized in that** said aroma precursor added to the culture medium of said truffle mycelium is present at a dose comprised between 10 and 1000 mM.

3. Method for the production of truffle natural aromas according to any of the claims 1 to 2, **characterized in that** said aroma precursor added to the culture medium of said truffle mycelium is present at a dose comprised between 10 and 500 mM.

4. Method for the production of truffle natural aromas according to any of the claims 1 to 3, **characterized in that** said aroma precursor added to the culture medium of said truffle mycelium is present at a dose comprised between 50 and 500 mM.

5. Method for the production of truffle natural aromas according to claim 1, **characterized in that** the L-methionine or the valine added to the culture medium of said truffle mycelium are present at a dose greater than or equal to 50 mM.

6. Method for the production of truffle natural aromas according to claim 1, **characterized in that** the leucine or the isoleucine added to the culture medium of said truffle mycelium are present at a dose greater than or equal to 100 mM.

7. Method for the production of truffle natural aromas according to claim 1, **characterized in that** the phenylalanine or the 2-oxo-4-methylthiobutyric acid, degradation product of L-methionine, added to the culture medium of said truffle mycelium are present at a dose greater than or equal to 10 mM.

8. Method for the production of truffle natural aromas according to claim 1, **characterized in that** the amino acids are selected from among L-methionine, isoleucine, their precursors, their degradation products and/or their mixtures.

9. Method for the production of truffle natural aromas according to any of the claims 1 to 8, **characterized in that** the cultured truffle mycelium originates from at least one of the following species: *Tuber melanosporum*, *Tuber magnatum*, *Tuber aestivum*, *Tuber uncinatum*, *Tuber brumale*, *Tuber borchii, Tuber mesentericum* or *Tuber indicum.*

10. Method for the production of truffle natural aromas according to any of the claims 1 to 9, **characterized in that** the culture of truffle mycelium further contains bacteria and/or yeasts, natural hosts of the sporocarps of said truffles.

11. Method for the production of truffle natural aromas according to any of the claims 1 to 10, **characterized in that** said truffle mycelia cultivated in the presence of at least one aroma precursor are held in culture during at least 7 days at a temperature comprised between 10 and 30°C.

12. Method for the production of truffle natural aromas according to claim 11, **characterized in that** the culture temperature is comprised between 15 and 20°C.

13. Method for the production of truffle natural aromas according to any of the claims 1 to 12, **characterized in that** the truffle natural aroma is a volatile molecule comprising dimethyl sulphide, dimethyl disulphide, dimethyl trisulphide, 2-methyl butanal, 2-methyl propanal, 3-methyl-1-butanal, 2-phenylethanol, 2,4-dithiapentane, 1-octene-3-ol, 3-octanone, their oxidized or reduced derivatives and/or their mixtures.

14. Method for the production of truffle natural aromas according to any of the claims 1 to 13, **characterized in that** said aroma precursor added to the culture medium of said truffle mycelium further comprises linoleic acid.

15. Use of at least one aroma precursor to induce the production of volatile components of the natural aroma of truffle (Tuber ssp.) sporocarps from cultured truffle mycelium, **characterized in that** said aroma precursor is selected from among natural or synthetic amino acids of L-methionine, leucine, isoleucine, valine, phenylalanine and/or their mixtures, their precursors and/or their degradation products, and wherein said aroma precursor added to the culture medium of said truffle mycelium is present in large excess greater than or equal to 10 mM.

16. Use according to claim 15, **characterized in that** said aroma precursor added to the culture medium of said truffle mycelium is present at a dose comprised between 10 and 1000 mM.

17. Use according to claim 15, **characterized in that** the amino acids are selected from among L-methionine, isoleucine, their precursors, their degradation products and/or their mixtures.

18. Use of cultured truffle (Tuber ssp.) mycelium in combination with bacteria and/or yeasts, natural hosts of the sporocarps of said truffles, in order to generate the volatile molecules characteristic of the truffle aroma, **characterized in that** said cultured truffle (Tuber ssp.) mycelium in combination with said bacteria and/or yeasts, natural hosts of the sporocarps of said truffles, are cultivated according to the method of claims 1 to 14.

19. Use according to claim 18, **characterized in that** the cultured truffle mycelium originates from at least one of the following species: *Tuber melanosporum*, *Tuber magnatum*, *Tuber aestivum*, *Tuber uncinatum, Tuber brumale*, *Tuber borchii, Tuber mesentericum* or *Tuber indicum.*
